(19) **Europäisches Patentamt**
**European Patent Office**
**Office européen des brevets**

(11) **EP 1 777 968 A1**

(12) **EUROPEAN PATENT APPLICATION**

(43) Date of publication:
**25.04.2007 Bulletin 2007/17**

(51) Int Cl.:
**H04N 7/26** (2006.01)

(21) Application number: **06121786.5**

(22) Date of filing: **05.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.10.2005 US 727851 P**
**13.01.2006 KR 20060004139**

(71) Applicant: **SAMSUNG ELECTRONICS CO., LTD.**
**Suwon,**
**Gyeonggi-do 442-742 (KR)**

(72) Inventors:
• **Lee, Bae-keun**
**Gyeonggi-do (KR)**
• **Han, Woo-jin,**
 **108-703 Jugong 2 danji Apt.,**
**Suwon-si, Gyeonggi-do (KR)**

(74) Representative: **Brandon, Paul Laurence**
**APPLEYARD LEES**
**15 Clare Road**
**Halifax HX1 2HY (GB)**

(54) **Method of encoding flags in layers using inter-layer correlation, method and apparatus for decoding coded flags**

(57) A method and apparatus for efficiently encoding diverse flags being used in a multilayer-based scalable video codec, based on an inter-layer correlation. The encoding method includes judging whether flags of a current layer included in a specified unit area are all equal to flags of a base layer, setting a specified prediction flag according to the result of judgment, and if it is judged that the flags of the current layer are equal to the flags of the base layer, skipping the flags of the current layer and inserting the flags of the base layer and the prediction flag into a bitstream.

**FIG. 4**

**Description**

The present invention relates to video compression, and to encoding flags in layers using inter-layer correlation..

With the development of information and communication technologies, multimedia communications are increasing in addition to text and voice communications. Existing text-centered communication systems are insufficient to satisfy consumers' diverse desires, and thus multimedia services that can accommodate diverse forms of information such as text, image, music, and others, are increasing. Since multimedia data is large, mass storage media and wide bandwidths are required for storing and transmitting it. Accordingly, compression coding techniques are required to transmit the multimedia data.

The basic principle of data compression is to remove data redundancy. Data can be compressed by removing spatial redundancy such as a repetition of the same color or object in images, temporal redundancy such as similar neighboring frames in moving images or continuous repetition of sounds and visual/perceptual redundancy, which considers human insensitivity to high frequencies.

In a general video coding method, the temporal redundancy is removed by temporal filtering based on motion compensation, and the spatial redundancy is removed by a spatial transform.

The resultant data, from which the redundancy is removed, is lossy-encoded according to specified quantization operations in a quantization process. The result of quantization is finally losslessly encoded through an entropy coding.

As set forth in the current scalable video coding draft (hereinafter referred to as the SVC draft) having been expedited by Joint Video Team (JVT) which is a video experts group of International Organization for Standardization / International Electrotechnical Commission (ISO/IEC) and International Telecommunication Union (ITU), research is under way for implementing the multilayered video codec, based on the existing H.264 standard.

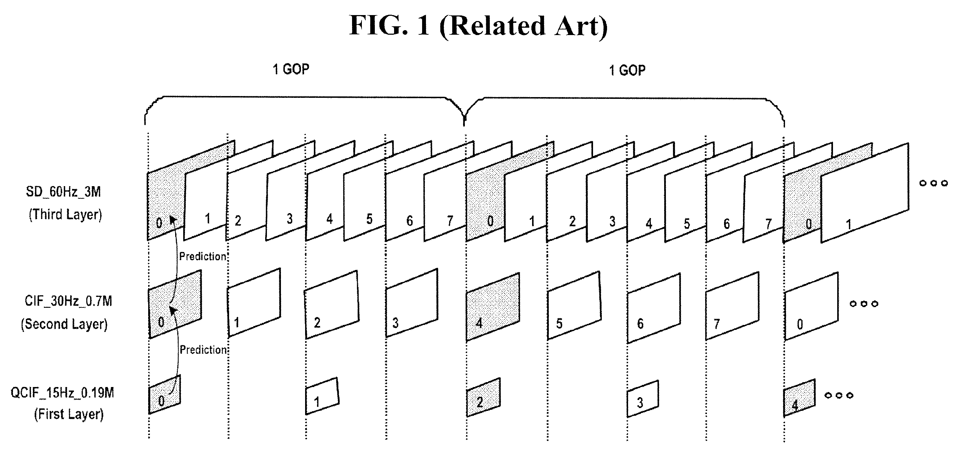

FIG. 1 illustrates a scalable video coding structure using a multilayer structure. In this video coding structure, the first layer is set to Quarter Common Intermediate Format (QCIF) at 15 Hz (frame rate), the second layer is set to Common Intermediate Format (CIF) at 30 Hz, and the third layer is set to Standard Definition (SD) at 60 Hz. If a CIF 0.5 Mbps stream is required, the bitstream may be truncated so that a bit rate is 0.5 Mbps in the second layer having a CIF, a frame rate of 30 Hz and a bit rate of 0.7 Mbps. In this manner, spatial, temporal and signal-to-noise ratio (SNR) scalability can be implemented. Since some similarity exists between layers, a method for heightening the coding efficiency of a certain layer (e.g., texture data, motion data, and others) using predicted information from another layer is frequently used in encoding the respective layers.

On the other hand, in the scalable video coding, diverse flags related to whether to use inter-layer information exist, which may be set by slices, macro-blocks, sub-blocks, or even coefficients. Accordingly, in the video coding, overhead that increases by the flags cannot be disregarded.

However, at present, the flags, unlike the texture data or motion data, have not been encoded separately or have never been encoded, without considering the inter-layer correlation.

Illustrative, non-limiting embodiments of the present invention overcome the above disadvantages and other disadvantages not described above. Also, the present invention is not required to overcome the disadvantages described above, and an illustrative, non-limiting embodiment of the present invention may not overcome any of the problems described above.

Preferred embodiments of the present invention aim to provide a method and apparatus for efficiently encoding various flags used in a multilayer-based scalable video codec, based on an inter-layer correlation.

According to an aspect of the present invention, there is provided a method of encoding flags of a current layer, which are used in a multilayer-based video, using correlation with corresponding flags of a base layer, the method including judging whether the flags of the current layer included in a specified unit area are all equal to the flags of the base layer; setting a specified prediction flag according to the result of judgment; and if it is judged that the flags of the current layer are equal to the flags of the base layer, skipping the flags of the current layer, and inserting the flags of the base layer and the prediction flag into a bitstream.

According to another aspect of the present invention, there is provided a method of encoding flags of a current layer, which are used in a multilayer-based video, using correlation with corresponding flags of a base layer, the method including obtaining exclusive OR values of the flags of the current layer and the flags of the base layer; performing an entropy coding of the obtained OR values; and inserting the result of the entropy coding and the flags of the base layer into a bitstream.

According to still another aspect of the present invention, there is provided a method of decoding encoded flags of a current layer using correlation with flags of a base layer in a multilayer-based video, the method including reading a prediction flag and the flags of the base layer from an input bitstream; if the prediction flag has a first bit value, substituting the read flags of the base layer for the flags of the current layer in a specified unit area to which the prediction flag is allocated; and outputting the substituted flags of the current layer.

According to still another aspect of the present invention, there is provided a method of decoding encoded flags of a current layer using correlation with flags of a base layer in a multilayer-based video, the method including reading the flags of the base layer and the encoded flags of the current layer from an input bitstream;

performing an entropy decoding of the encoded flags of the current layer; obtaining exclusive OR values of the result of the entropy decoding and the read flags of the base layer; and outputting the result of the exclusive OR operation.

Further features of the present invention are set out in the appended claims.

The present invention will be more apparent from the following detailed description of exemplary embodiments taken in conjunction with the accompanying drawings, in which:

FIG. 1 is a view illustrating a scalable video coding structure using a multilayer structure;

FIG. 2 is a view illustrating an FGS coding structure composed of a discrete layer and at least one FGS layer;

FIG. 3 is a conceptual view explaining three prediction techniques provided in a scalable video coding;

FIG. 4 is a block diagram illustrating the construction of a flag encoding apparatus according to an exemplary embodiment of the present invention;

FIG. 5 is a view illustrating an example of refinement coefficients;

FIG. 6 is a block diagram illustrating the construction of a flag decoding apparatus according to an exemplary embodiment of the present invention;

FIG. 7 is a flowchart illustrating a flag encoding method according to an exemplary embodiment of the present invention;

FIG. 8 is a flowchart illustrating a flag encoding method according to another exemplary embodiment of the present invention;

FIG. 9 is a flowchart illustrating a flag decoding method according to an exemplary embodiment of the present invention;

FIG. 10 is a flowchart illustrating a flag decoding method according to another exemplary embodiment of the present invention;

FIG. 11 is a block diagram illustrating the construction of an exemplary multilayer-based video encoder to which the flag encoding apparatus of FIG. 4 can be applied; and

FIG. 12 is a block diagram illustrating the construction of an exemplary multilayer-based video decoder to which the flag decoding apparatus of FIG. 6 can be applied.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

In the paper "Variable length code for SVC" (JVT-P056, Poznan, 16th JVT meeting; hereinafter referred to as "JVT-P056") submitted by J Ridge and M. Karczewicz at the 16th JVT meeting, a context adaptive variable length coding (CAVLC) technique in consideration of the scalable video coding (SVC) characteristic was presented. JVT-P056 follows the same process as the existing H.264 standard in a discrete layer, but uses a separate VLC technique according to the statistical characteristics in a fine granular scalability layer (FGS layer). The FGS layer is a layer that is equal to or higher than the second layer in the FGS coding, and the discrete layer is the first layer in the FGS coding.

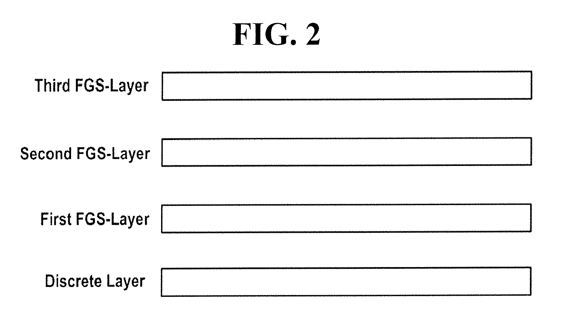

As shown in FIG. 2, in performing entropy encoding of coefficients constituting one discrete layer and at least one FGS layer, three scanning passes, i.e., significance pass, refinement pass, and remainder pass, are used. Different methods are applied to the respective scanning passes according to their statistical characteristics. In particular, for the refinement pass, a VLC table, which is obtained based on the fact that the value "0" is preferable to other values in the entropy coding, is used. Generally, an FGS-layer coefficient of which the corresponding discrete-layer coefficient is "0" is called a significance coefficient, and an FGS-layer coefficient of which the corresponding discrete-layer coefficient is not "0" is called a refinement coefficient. The important coefficient is encoded by the significance pass, while the refinement coefficient is encoded by the refinement pass.

In JVT-P056, the VLC technique for the FGS layer has been proposed. According to this technique, the conventional CAVLC technique is used in the discrete layer, but a separate technique using the statistical characteristic is used in the FGS layer. In particular, JVT-P056, in coding the refinement coefficients in the refinement pass among the three scanning passes, groups the absolute values of the refinement coefficients in terms of four, encodes the grouped refinement coefficients using a VLC table, and encodes sign flags for discriminating the positive/negative sign of the refinement coefficients, separately from the grouped refinement coefficients. Since the sign flag of the refinement coefficient is given for each refinement coefficient (except for the case where the refinement coefficient is "0"), overhead due to this becomes great. Accordingly, in order to reduce the overhead of the sign flag, entropy coding such as a run-level coding is applied to the sign flag. However, this is done using only information in the corresponding FGS layer, without using information of other FGS layers.

However, as a result of observing diverse video samples, it can be known that the sign of the refinement coefficient in the first FGS-layer is equal to that of the corresponding refinement coefficient in the discrete layer. Nevertheless, it is quite inefficient to use only the information of the corresponding layer in encoding the sign flag of the refinement coefficient in the first FGS-layer.

According to the current scalable video coding draft, in addition to the sign flag, diverse flags such as a residual prediction flag, an intra base flag, a motion prediction flag, a base mode flag, and others, are used in performing the entropy coding of the FGS layer. These flags are included in the bitstream, and transmitted to a video decoder side.

The residual prediction flag is a flag that indicates whether the residual prediction is used. The residual prediction is a technique that can reduce inter-layer redundancy of residual signals by predicting a residual signal of a certain layer using the corresponding residual signal of the base layer. Since the base layer is a certain layer that is referred to for an efficient encoding of another layer, it is not limited to the first layer, and does not necessarily mean a lower layer.

Whether the residual prediction is used is indicated by the residual prediction flag that is transferred to the video decoder side. If the flag is "1", it indicates that the residual prediction is used, while if the flag is "0", it indicates that the residual prediction is not used.

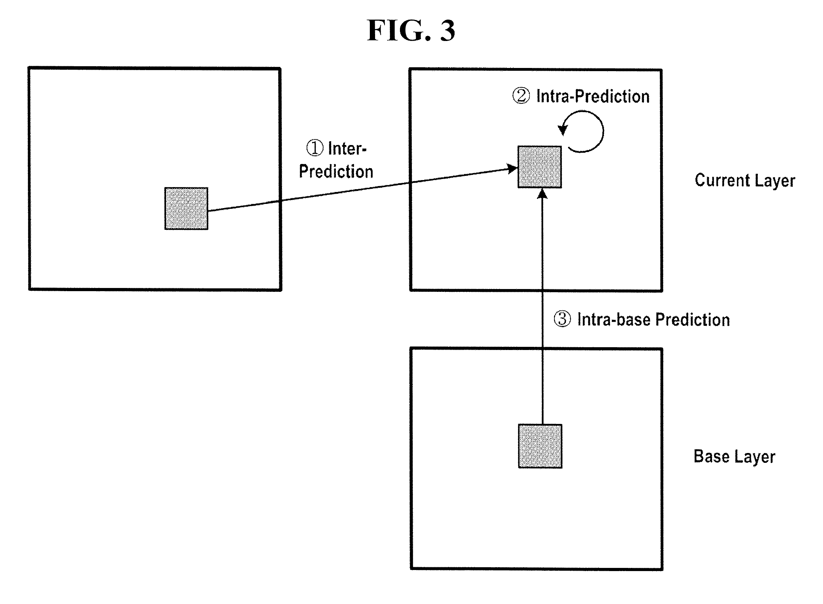

The intra base flag is a flag that indicates whether the intra base prediction is used. According to the current scalable video coding draft, in addition to an inter-prediction (①) and an intra-prediction (②), which have been used in the existing H.264 standard, an intra base prediction (③) for reducing data to be encoded by predicting a frame of the current layer using the base-layer image has also been supported, as shown in FIG. 3. In the draft, the intra base prediction is considered as a kind of intra-prediction. In the intra-prediction, if the intra base flag is "0", it indicates the conventional intra-prediction, while if the intra base flag is "1", it indicates the intra base prediction.

The motion prediction flag is a flag that indicates, in obtaining a motion vector difference (MVD) by predicting a motion vector of the current layer, whether another motion vector of the same layer or a motion vector of the base layer is used. If the flag is "1", it indicates that the motion vector of the base layer is used, while if the flag is "0", it indicates that another motion vector of the same layer is used.

The base mode flag is a flag that indicates, in indicating motion information of the current layer, whether motion information of the base layer is used. If the base mode flag is "1", the motion information of the base layer itself is used as the motion information of the current layer, or somewhat refined motion information of the base layer is used. If the base mode flag is "0", it indicates that the motion information of the current layer is separately retrieved and recorded irrespective of the motion information of the base layer. The motion information includes a macro-block type mb_type, a picture reference direction (i.e., forward, backward, and bidirectionally) during inter-prediction, and a motion vector.

The above-described flags have somewhat of a correlation between the respective layers. That is, there is a high probability that the flag of the current layer has the same value as the corresponding flag of the base layer. Also, in the typical entropy coding, it is well known that the compression efficiency is improved as the number of values "0" included in the values to be encoded becomes larger. This is because in the entropy encoding, a series of values "0" is processed as one run, or processed with reference to a table that is biased to "0". Considering these points, the compression efficiency in performing the entropy coding can be improved by setting the flag to "0" if the flag of the base layer is equal to the corresponding flag of the current layer, while setting the flag to "1" otherwise.

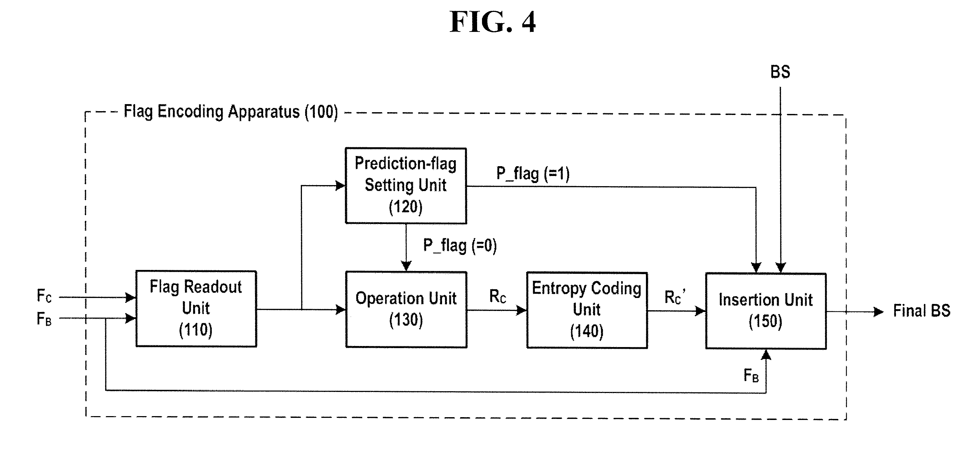

FIG. 4 is a block diagram illustrating the construction of a flag encoding apparatus according to an exemplary embodiment of the present invention. The flag encoding apparatus 100 may include a flag readout unit 110, a prediction flag setting unit 120, an operation unit 130, an entropy coding unit 140, and an insertion unit 150.

The flag readout unit 110 reads flag values stored in a specified memory region. Generally, the flag value is indicated by one bit ("I" or "0"), but is not limited thereto. The flags includes flags $F_C$ of the current layer and corresponding flags $F_B$ of the base layer.

The prediction flag setting unit 110, in a specified unit area, judges whether the flags $F_c$ of the current layer are all equal to the corresponding flags $F_B$ of the base layer, and if so, it sets the prediction flag P_flag to "0", otherwise, it sets the prediction flag P_flag to "1". The unit area may be a frame, a slice, a macro-block, or a sub-block. If the flags included in the unit area are equal to each other through layers, the flags $F_c$ of the current layer can be skipped rather than being set to "1". In this case, only the flags $F_B$ of the lower layer and the prediction flag P_flag are inserted into the bitstream, and transmitted to the video decoder side.

The operation unit 130 performs an exclusive OR operation with respect to the flags $F_c$ of the current layer and the corresponding flags $F_B$ of the base layer in the case where the prediction flag is set to "0". The exclusive OR operation is a logical operation whereby if two input bit values are equal to each other, "0" is output, while if they are not equal to each other, "1" is output. If there is a high possibility that the flags $F_C$ and $F_B$ of the corresponding layers are equal to each other, most outputs obtained by the operation become "0", and thus the entropy coding efficiency can be improved.

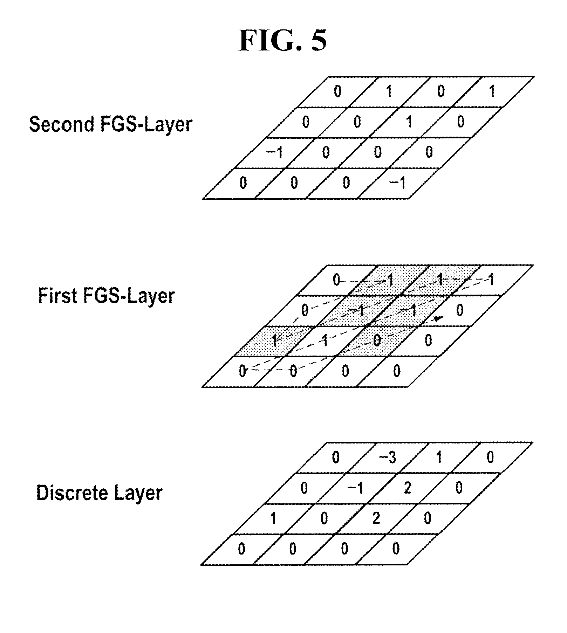

For example, if it is assumed that the first FGS-layer is the current layer, refinement coefficients for each sub-block of the first FGS-layer are shown as shaded parts in FIG. 5. If the refinement coefficients are arranged in the order as indicated as a dotted-line arrow (in a zig-zag manner) in FIG. 5, the sign flag of the current layer becomes {10101}, and the corresponding sign flag of the base layer (i.e., discrete layer) becomes {10100}, where a positive sign is indicated as "0", and a negative sign is indicated as "1"). By performing an exclusive OR operation with respect to a set of the flags, the result of the operation becomes {00001}. In this case, it is advantageous in compression efficiency to perform entropy coding of the operation result, {00001}, rather than to perform entropy coding of the sign flag, {10101}, of the current layer.

Referring again to FIG. 4, the entropy coding unit 140 performs a lossless coding of the operation result output from the operation unit 130. A variable length coding (including a CAVLC), an arithmetic coding (including a context-based adaptive binary arithmetic coding), a Huffman coding, and others, can be used as the lossless coding method.

If the prediction flag P_flag is "1", the insertion unit 150 inserts the prediction flag and the flags $F_B$ of the base layer into the bitstream (BS). By contrast, if the prediction flag is "0", the insertion unit 150 inserts the prediction flag, the flags $F_B$ of the base layer, and the entropy-coded operation result $R_C$' into the bitstream (BS). The bitstream (BS) is data that has been lossy-coded by the multilayer video encoder, and the final bitstream is output as a result of insertion.

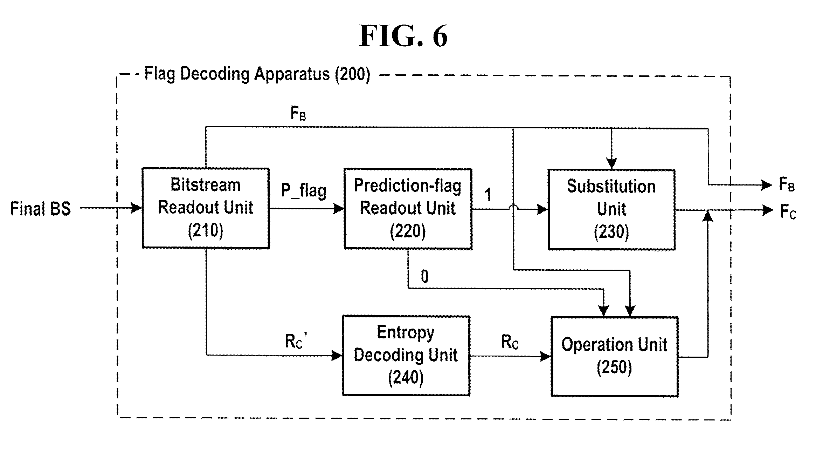

FIG. 6 is a block diagram illustrating the construction of a flag decoding apparatus. The flag decoding apparatus 200 may include a bitstream readout unit 210, a prediction flag readout unit 220, a substitution unit 230, an entropy decoding unit 240, and an operation unit 250.

The bitstream readout unit 210 extracts the flags $F_B$ of the base layer and the prediction flag P_flag by parsing the final bitstream. The bitstream readout unit 210 also extracts the entropy-coded operation result $R_c$' if it exists in the bitstream.

The prediction flag readout unit 220 reads the extracted prediction flag P_flag, and if the prediction flag value is "0", it operates the operation unit 250, while if the prediction flag value is "1", it operates the substitution unit 230.

The substitution unit 230 substitutes the flags $F_B$ of the base layer for the flags $F_C$ of the current layer if the prediction flag readout unit 220 notifies that the prediction flag is "1". Accordingly, the output flags $F_B$ of the base layer and the flags $F_c$ of the current layer become equal to each other.

The entropy decoding unit 240 performs a lossless decoding of the operation result $R_C$'. This decoding operation is reverse to the lossless coding operation performed by the entropy coding unit 140.

The operation unit 250, if the prediction flag readout unit 220 notifies that the prediction flag is "0", performs an exclusive OR operation with respect to the flags $F_B$ of the base layer and the result of lossless coding $R_C$. Initially, the operation unit 130 calculates $R_C$ through an operation as expressed below in Equation (1) (where, ^ is a mark of exclusive OR operation), and by taking "^$F_B$" on both sides of Equation (1), "^$F_B$^$F_B$" on the right side of Equation (1) is deleted to produce the result as expressed below by Equation (2).

$$R_C = F_C \,^\wedge\, F_B \qquad \ldots\ldots (1)$$

$$R_C \,^\wedge\, F_C = F_C \qquad \ldots\ldots (2)$$

Accordingly, the operation unit 250 can restore the flags $F_C$ of the current layer by performing an exclusive OR operation with respect to $R_C$ and $F_B$. Finally, outputs of the flag decoding apparatus 200 become the flags $F_B$ of the base layer and the flags $F_c$ of the current layer.

The respective constituent elements in FIGs. 4 and 6 may be implemented by a task that is performed in a specified area of a memory, glass, subroutine, process, object, execution thread, software such as a program, hardware such as an FPGA (Field-Programmable Gate Array) or an ASIC (Application-Specific Integrated Circuit), or combination of the software and hardware. The constituent elements may be included in a computer-readable storage medium, or their parts may be distributed in a plurality of computers.

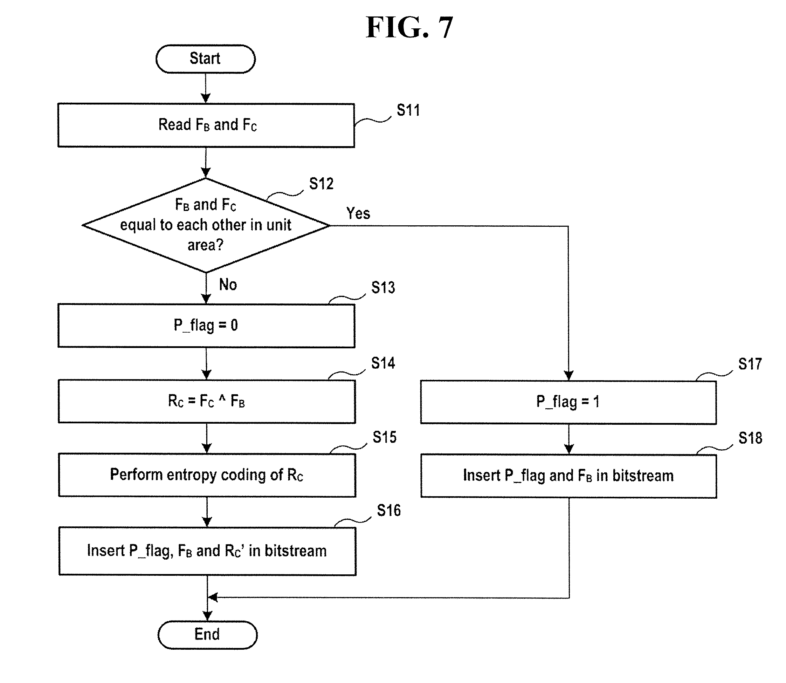

FIG. 7 is a flowchart illustrating a flag encoding method according to an exemplary embodiment of the present invention.

First, the flag readout unit 110 reads the flags $F_B$ of the base layer and the flags $F_C$ of the current layer (S11). Then, the prediction flag setting unit 120 judges whether the flags $F_B$ and the corresponding flags $F_C$ read in the unit area are equal to each other (S12).

If the flags $F_B$ and $F_C$ are equal to each other as a result of judgment ("Yes" in operation S12), the prediction flag setting unit 120 sets the prediction flag P_flag to "1" (S 17), and the insertion unit 150 inserts the prediction flag P_flag and $F_B$ into the bitstream (S18).

If the flags $F_B$ and $F_C$ are not equal to each other as a result of judgment ("No" in operation S12), the prediction flag setting unit 120 sets the prediction flag P_flag to "0" (S 13). Then, the operation unit 130 performs an exclusive OR operation with respect to $F_B$ and $F_C$ (S14). In another exemplary embodiment of the present invention, the process in operation S14 may be omitted (in this case, $F_C$ will be directly entropy-coded.

The entropy coding unit 140 performs entropy coding of the operation result $R_C$ (S15). Finally, the insertion unit 150 inserts the prediction flag P_flag, the flags $F_B$ of the base layer, and the result of entropy coding $R_C$' into the bitstream (S16).

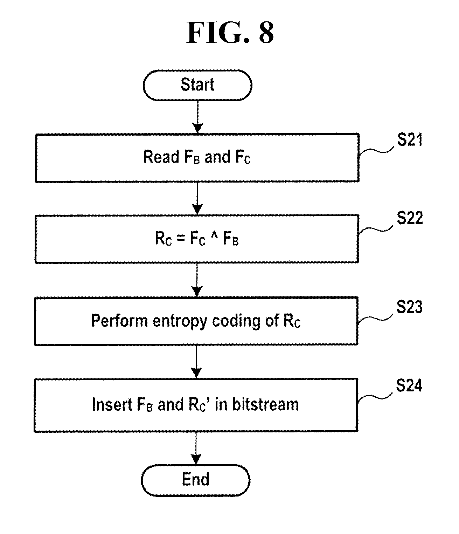

FIG. 8 is a flowchart illustrating a flag encoding method according to another exemplary embodiment of the present invention. This flag encoding method excludes the prediction flag setting process. In the method as illustrated in FIG. 8, the exclusive OR operation is performed irrespective of whether $F_B$ and $F_C$ are equal to each other in the unit area.

First, the flag readout unit 110 reads the flags $F_B$ of the base layer and the flags $F_C$ of the current layer (S21). Then, the operation unit 130 performs an exclusive OR operation with respect to $F_B$ and $F_C$ (S22). The entropy coding unit 140 performs entropy coding of the operation result $R_C$ (S23). Finally, the insertion unit 150 inserts the prediction flag P_flag, the flags $F_B$ of the base layer, and the result of entropy coding $R_C$' into the bitstream (S24).

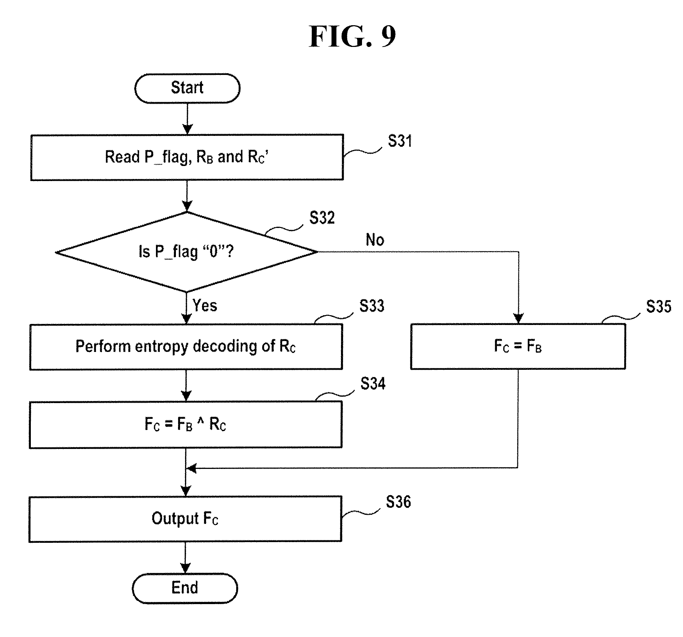

FIG. 9 is a flowchart illustrating a flag decoding method according to an exemplary embodiment of the present invention.

First, the bitstream readout unit 210 reads the final bitstream (BS), and extracts the flags $F_B$ of the base layer, the entropy-coded operation result $R_C$', and the prediction flag P_flag (S31). Then, the prediction flag readout unit 220 judges whether the extracted prediction flag P_flag is "0" (S32).

If the prediction flag P_flag is "1" as a result of judgment ("No" in operation S32), the substitution unit 230 substitutes the extracted flags $F_B$ of the base layer (S35) for the flags $F_C$ of the current layer, and outputs the substituted flags $F_C$ of the current layer (S36). The unit area may correspond to a frame, a slice, a macroblock, or sub-block.

If the prediction flag P_flag is "0" as a result of judgment ("Yes" in operation S32), the entropy decoding unit 240 restores the operation result $R_C$ by decoding the entropy-coded operation result $R_C$' (S33). This decoding operation is reverse to the entropy coding operation.

The operation unit 250 restores the flags $F_C$ of the current layer by performing an exclusive OR operation with respect to the flags $F_B$ of the base layer and the result of lossless coding $R_C$ (S34). Then, the operation unit 250 outputs the restored flags $F_C$ of the current layer (S36).

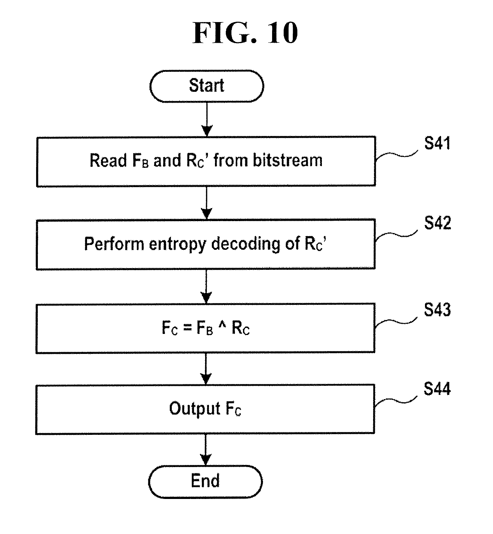

FIG. 10 is a flowchart illustrating a flag decoding method according to another exemplary embodiment of the present invention. This flag decoding method excludes the process related to the prediction flag. In the method as illustrated in FIG. 10, the entropy decoding process (S42) and the exclusive OR operation (S43) are applied, irrespective of the value of the prediction flag P_flag.

First, the bitstream readout unit 210 reads the final bitstream (BS), and extracts the flags $F_B$ of the base layer and the entropy-coded operation result $R_c$' (S41). Then, the entropy decoding unit 240 restores the operation result $R_C$ by decoding the entropy-coded operation result $R_c$' (S42). The operation unit 250 restores the flags $F_c$ of the current layer by performing an exclusive OR operation with respect to the flags $F_B$ of the base layer and the result of lossless coding $R_c$ (S43), and then outputs the restored flags $F_c$ of the current layer (S44).

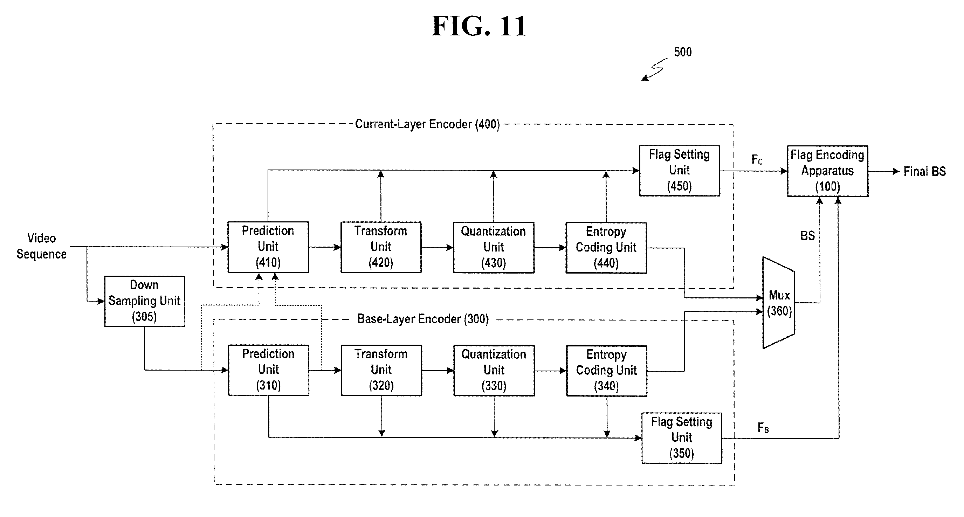

FIG. 11 is a block diagram illustrating the construction of a multilayer-based video encoder to which the flag encoding apparatus of FIG. 4 can be applied.

An original video sequence is input to a current-layer encoder 400, and down-sampled (only in the case where the resolution has been changed between layers) by a down sampling unit 350 to be input to the base-layer encoder 300.

A prediction unit 410 obtains a residual signal by subtracting a predicted image from the current macroblock in a specified method. A directional intra-prediction, an inter-prediction, an intra base prediction, and a residual prediction can be used as the prediction method.

A transform unit 420 transforms the obtained residual signal using a spatial transform technique such as a discrete cosine transform (DCT) and a wavelet transform, and generates transform coefficients.

A quantization unit 430 quantizes the transform coefficients through a specified quantization operation (as the quantization operation becomes larger, data loss or compression rate becomes greater), and generates quantization coefficients.

An entropy coding unit 440 performs a lossless coding of the quantization coefficients, and outputs the current-layer bitstream.

The flag setting unit 450 sets flags from information obtained in diverse operations. For example, the residual prediction flag and the intra base flag are set through information obtained from the prediction unit 410, and the sign flag of the refinement coefficient is set through information obtained from the entropy coding unit 440. The flags $F_C$ of the current layer as set above are input to the flag encoding apparatus 100.

In the same manner as the current-layer encoder 400, the base-layer encoder 300 includes a prediction unit 310, a transform unit 320, a quantization unit 330, an entropy coding unit 340, and a flag setting unit 350, which have the same functions as those of the current-layer encoder 400. The entropy coding unit 340 outputs a base-layer bitstream to a multiplexer (mux) 360, and the flag setting unit 350 provides the base-layer flags $F_B$ to the flag encoding apparatus 100.

The mux 360 combines the current-layer bitstream with the base-layer bitstream to generate the bitstream (BS), and provides the generated bitstream to the flag encoding apparatus 100.

The flag encoding apparatus 100 encodes $F_C$ using correlation between $F_B$ and $F_C$, and inserts the encoded $F_C$ and $F_B$ into the provided bitstream to output the final bitstream (final BS).

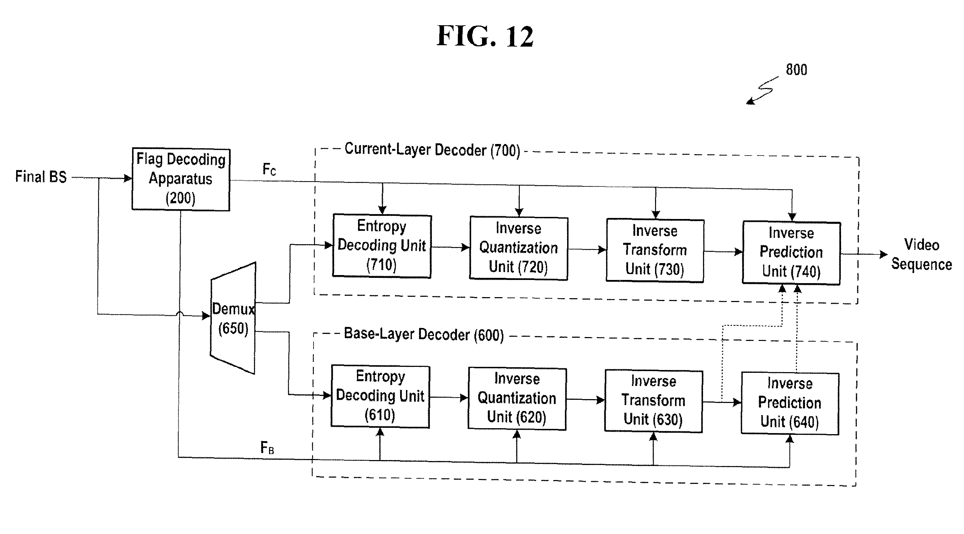

FIG. 12 is a block diagram illustrating the construction of a multilayer-based video decoder to which the flag decoding apparatus of FIG. 6 can be applied.

Input final bitstream (final BS) is input to the flag decoding apparatus 200 and a demultiplexer (demux) 650. The demux 650 separates the final bitstream into a current-layer bitstream and a base-layer bitstream, and provides the current-layer bitstream and the base-layer bitstream to a current-layer encoder 700 and a base-layer decoder 600, respectively.

An entropy decoding unit 710 restores quantization coefficients by performing a lossless decoding that corresponds to the lossless coding performed by the entropy coding unit 440.

An inverse quantization unit 720 performs an inverse quantization of the restored quantization coefficients by the quantization operation used in the quantization unit 430.

An inverse transform unit 730 performs inverse transform of the result of inverse quantization using an inverse spatial transform technique such as an inverse DCT and an inverse wavelet transform.

An inverse prediction unit 740 obtains the predicted image obtained by the prediction unit 410 in the same manner, and restores a video sequence by adding the result of inverse transform to the obtained predicted image.

In the same manner as the current-layer decoder 700, the base-layer decoder 600 includes an entropy decoding unit 610, an inverse quantization unit 620, an inverse transform unit 630, and an inverse prediction unit 640.

On the other hand, the flag decoding apparatus 200 extracts the base-layer flags $F_B$ and encoded values of the current-layer flags $F_C$ from the final bitstream, and restores the current-layer flags $F_C$ from $F_B$ and the encoded values.

The extracted base-layer flags $F_B$ are used for the corresponding operations of the constituent elements 610, 620, 630, and 640 of the base-layer decoder 600, and the restored current-layer flags $F_C$ are used for the corresponding operations of the constituent elements 710, 720, 730, and 740 of the current-layer decoder 700.

As described above, according to preferred embodiments of the present invention, the encoding efficiency of various flags that are used in a multilayer-based scalable video codec can be improved.

The exemplary embodiments of the present invention have been described for illustrative purposes, and those skilled in the art will appreciate that various modifications, additions and substitutions are possible without departing from the scope and spirit of the invention as disclosed in the accompanying claims. Therefore, the scope of the present invention should be defined by the appended claims and their legal equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of encoding flags of a current layer, which are used in a multilayer-based video, using correlation with corresponding flags of a base layer, the method comprising:

   determining whether the flags of the current layer included in a specified unit area are equal to the flags of the base layer;
   setting a prediction flag according to a result of the determining; and
   if it is determined that the flags of the current layer are equal to the flags of the base layer, inserting the flags of the base layer and the prediction flag into a bitstream.

2. The method of claim 1, further comprising, if it is determined that the flags of the current layer are not equal to the flags of the base layer, entropy coding the flags of the current layer, and inserting the flags of the base layer, the prediction flag, and the entropy-coded flags of the current layer into the bitstream.

3. The method of claim 2, further comprising performing an exclusive OR values on the flags of the current layer and the flags of the base layer prior to the entropy coding,
   wherein the entropy-coded flags of the current layer are values obtained by the performing of the exclusive OR operation.

4. The method of any preceding claim, wherein the unit area corresponds to a frame, a slice, a macro-block, or a sub-block.

5. The method of any preceding claim, wherein the flags of the current layer and the flags of the base layer comprise at least one of a residual prediction flag, an intra base flag, a motion prediction flag, a base mode flag, and a sign flag of a refinement coefficient.

6. The method of any preceding claim, wherein, if it is determined that the flags of the current layer are equal to the flags of the base layer, the prediction layer is set to "1", and if it is determined that the flags of the current layer are not equal to the flags of the base layer, the prediction layer is set to "0."

7. A method of encoding flags of a current layer, which are used in a multilayer-based video, using correlation with corresponding flags of a base layer, the method comprising:

performing an exclusive OR operation on the flags of the current layer and the flags of the base layer;
entropy coding values obtained by the performing of the exclusive OR operation; and
inserting the entropy coded values and the flags of the base layer into a bitstream.

8. The method of claim 7, wherein the entropy coding comprises at least one of a variable length coding, an arithmetic coding, and a Huffman coding.

9. The method of claim 7 or claim 8, wherein the flags of the current layer and the flags of the base layer comprise at least one of a residual prediction flag, an intra base flag, a motion prediction flag, a base mode flag, and a sign flag of a refinement coefficient.

10. A method of decoding encoded flags of a current layer using correlation with flags of a base layer in a multilayer-based video, the method comprising:

reading a prediction flag and the flags of the base layer from an input bitstream;
if the prediction flag has a first bit value, substituting the read flags of the base layer for the flags of the current layer in a specified unit area to which the prediction flag is allocated; and
outputting the substituted flags of the current layer.

11. The method of claim 10, further comprising:

reading the encoded flags of the current layer from the input bitstream;
if the prediction flag has a second bit value, performing entropy decoding of the encoded flags of the current layer;
performing an exclusive OR operation on a result of the entropy decoding and the read flags of the base layer; and
outputting a result of the performing of the exclusive OR operation.

12. The method of claim 11, wherein the entropy decoding comprises at least one of a variable length decoding, an arithmetic decoding, and a Huffman decoding.

13. The method of any one of claims 10 - 12, wherein the unit area corresponds to a frame, a slice, a macro-block, or a sub-block.

14. The method of any one of claims 10 - 13, wherein the flags of the current layer and the flags of the base layer comprise at least one of a residual prediction flag, an intra base flag, a motion prediction flag, a base mode flag, and a sign flag of a refinement coefficient.

15. A method of decoding encoded flags of a current layer using correlation with flags of a base layer in a multilayer-based video, the method comprising:

reading the flags of the base layer and the encoded flags of the current layer from an input bitstream;
entropy decoding the encoded flags of the current layer;
performing an exclusive OR operation on a result of the entropy decoding and the read flags of the base layer; and
outputting a result of the performing of the exclusive OR operation.

16. The method of claim 15, wherein the entropy decoding comprises at least one of a variable length decoding, an arithmetic decoding, and a Huffman decoding.

17. The method of claim 15 or claim 16, wherein the flags of the current layer and the flags of the base layer comprise at least one of a residual prediction flag, an intra base flag, a motion prediction flag, a base mode flag, and a sign flag of a refinement coefficient.

18. An apparatus (100) for encoding flags of a current layer, which are used in a multilayer-based video, using correlation with corresponding flags of a base layer, the apparatus comprising:

a prediction flag setting unit (120) which determines whether the flags of the current layer included in a specified unit area are equal to the flags of the base layer, and sets a prediction flag according to a result of the determination; and
an insertion unit (150) which inserts the flags of the base layer and the prediction flag into a bitstream, if it is determined that the flags of the current layer are equal to the flags of the base layer.

19. An apparatus (100) for encoding flags of a current layer, which are used in a multilayer-based video, using correlation with corresponding flags of a base layer, the apparatus comprising:

an operation unit (130) which performs an exclusive OR operation on the flags of the current layer and the flags of the base layer;
an entropy coding unit (140) which performs entropy coding of values obtained by the exclusive OR operation; and
an insertion unit (150) which inserts a result of the entropy coding and the flags of the base layer into a bitstream.

**20.** An apparatus (200) for decoding encoded flags of a current layer using correlation with flags of a base layer in a multilayer-based video, the apparatus comprising:

a bitstream readout unit (210) which reads a prediction flag and the flags of the base layer from an input bitstream; and
a substitution unit (230) which substitutes the read flags of the base layer for the flags of the current layer in a specified unit area to which the prediction flag is allocated if the prediction flag has a first bit value, and outputs the substituted flags of the current layer.

**21.** An apparatus (200) for decoding encoded flags of a current layer using correlation with flags of a base layer in a multilayer-based video, the apparatus comprising:

a bitstream readout unit (210) which reads the flags of the base layer and the encoded flags of the current layer from an input bitstream;
an entropy decoding unit (240) which performs entropy decoding of the encoded flags of the current layer; and
an operation unit (250) which performs an exclusive OR operation on a result of the entropy decoding and the read flags of the base layer, and outputs a result of the exclusive OR operation.

# FIG. 1 (Related Art)

EP 1 777 968 A1

# FIG. 2

Third FGS-Layer  [                                    ]

Second FGS-Layer  [                                    ]

First FGS-Layer  [                                    ]

Discrete Layer  [                                    ]

# FIG. 3

② Intra-Prediction

① Inter-Prediction

Current Layer

③ Intra-base Prediction

Base Layer

EP 1 777 968 A1

# FIG. 4

Flag Encoding Apparatus (100)

BS

$F_C$ → Flag Readout Unit (110)

$F_B$ →

Prediction-flag Setting Unit (120)

P_flag (=1)

P_flag (=0)

Operation Unit (130)

$R_C$

Entropy Coding Unit (140)

$R_C'$

Insertion Unit (150)

→ Final BS

$F_B$

EP 1 777 968 A1

13

# FIG. 5

Second FGS-Layer

| 0 | 1 | 0 | 1 |
| 0 | 0 | 1 | 0 |
| -1 | 0 | 0 | 0 |
| 0 | 0 | 0 | -1 |

First FGS-Layer

| 0 | -1 | 1 | -1 |
| 0 | -1 | -1 | 0 |
| 1 | 1 | 0 | 0 |
| 0 | 0 | 0 | 0 |

Discrete Layer

| 0 | -3 | 1 | 0 |
| 0 | -1 | 2 | 0 |
| 1 | 0 | 2 | 0 |
| 0 | 0 | 0 | 0 |

# FIG. 6

# FIG. 7

Start

Read $F_B$ and $F_C$ — S11

$F_B$ and $F_C$ equal to each other in unit area? — S12

Yes

No

P_flag = 0 — S13

P_flag = 1 — S17

$R_C = F_C \wedge F_B$ — S14

Insert P_flag and $F_B$ in bitstream — S18

Perform entropy coding of $R_C$ — S15

Insert P_flag, $F_B$ and $R_C'$ in bitstream — S16

End

EP 1 777 968 A1

# FIG. 8

Start

Read $F_B$ and $F_C$ — S21

$R_C = F_C \wedge F_B$ — S22

Perform entropy coding of $R_C$ — S23

Insert $F_B$ and $R_C$' in bitstream — S24

End

# FIG. 9

```
                    ┌──────────┐
                    │  Start   │
                    └────┬─────┘
                         │
                         ▼
        ┌────────────────────────────────────┐
        │   Read P_flag, R_B and R_C'        │ ╮ S31
        └────────────────┬───────────────────┘
                         │
                         ▼
                    ╱─────────╲                S32
                  ╱             ╲      No
                ◄   Is P_flag "0"?  ►──────────────────┐
                  ╲             ╱                       │
                    ╲─────────╱                         │
                         │ Yes                          │
                         ▼              S33             ▼        S35
        ┌────────────────────────────────────┐   ┌──────────────────────┐
        │   Perform entropy decoding of R_C  │   │    F_C = F_B         │
        └────────────────┬───────────────────┘   └──────────┬───────────┘
                         │              S34                  │
                         ▼                                   │
        ┌────────────────────────────────────┐              │
        │          F_C = F_B ^ R_C           │              │
        └────────────────┬───────────────────┘              │
                         │                                   │
                         ◄───────────────────────────────────┘
                         │              S36
                         ▼
        ┌────────────────────────────────────┐
        │            Output F_C              │
        └────────────────┬───────────────────┘
                         │
                         ▼
                    ┌──────────┐
                    │   End    │
                    └──────────┘
```

# FIG. 10

Start

Read $F_B$ and $R_C'$ from bitstream — S41

Perform entropy decoding of $R_C'$ — S42

$F_C = F_B \wedge R_C$ — S43

Output $F_C$ — S44

End

# FIG. 11

EP 1 777 968 A1

# FIG. 12

EP 1 777 968 A1

**EP 1 777 968 A1**

**European Patent**
**Office**

**EUROPEAN SEARCH REPORT**

Application Number

EP 06 12 1786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOO-JIN HAN ET AL.: "Symbol prediction techniques for SVC" JOINT VIDEO TEAM (JVT) OF ISO/IEC MPEG & ITU-T VCEG (ISO/IEC JTC1/SC29/WG11 AND ITU-T SG16 Q.6) 15TH MEETING: BUSAN, KR, 16-22 APRIL, 2005, [Online] 16 April 2005 (2005-04-16), XP002417974 Busan, KR Retrieved from the Internet: URL:http://ftp3.itu.ch/av-arch/jvt-site/20 05_04_Busan/JVT-0063.doc> [retrieved on 2007-01-31] * page 1, paragraph 1 - paragraph 2.1; figures 1,3-5 * | 1,2,4-6, 10,13, 14,18,20 | INV. H04N7/26 |
| Y | * page 1, paragraph 2.1 * | 3,7-9, 11,12, 15-17, 19,21 | |
| Y | WO 00/33583 A (MICROSOFT CORP [US]) 8 June 2000 (2000-06-08) * page 16, line 22 - line 27 * * page 6, lines 1-22 * * page 24; claim 4 * | 3,7-9, 11,12, 15-17, 19,21 | TECHNICAL FIELDS SEARCHED (IPC) H04N |
| A | "Description of core experiments in SVC" ISO/IEC JTC1/SC29/WG11 N6898, XX, XX, January 2005 (2005-01), page complete, XP002340411 * the whole document * | 1-21 | |

The present search report has been drawn up for all claims

| Place of search | Date of completion of the search | Examiner |
|---|---|---|
| The Hague | 14 March 2007 | Di Cagno, Gianluca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

22

## ANNEX TO THE EUROPEAN SEARCH REPORT
## ON EUROPEAN PATENT APPLICATION NO.

EP 06 12 1786

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2007

| Patent document cited in search report | | Publication date | Patent family member(s) | | Publication date |
|---|---|---|---|---|---|
| WO 0033583 | A | 08-06-2000 | EP | 1135934 A1 | 26-09-2001 |
| | | | JP | 3778798 B2 | 24-05-2006 |
| | | | JP | 2002532029 T | 24-09-2002 |
| | | | JP | 2006148970 A | 08-06-2006 |
| | | | JP | 2006187024 A | 13-07-2006 |
| | | | US | 2002097802 A1 | 25-07-2002 |
| | | | US | 2003179940 A1 | 25-09-2003 |

For more details about this annex : see Official Journal of the European Patent Office, No. 12/82